Europäisches Patentamt

European Patent Office

Office européen des brevets

(11) Publication number: 0 373 866
A2

## (12) EUROPEAN PATENT APPLICATION

(21) Application number: 89312936.1

(22) Date of filing: 12.12.89

(51) Int. Cl.5: C08F 8/42, C08F 2/24,
C04B 41/48

(30) Priority: 14.12.88 GB 8829147

(43) Date of publication of application:
20.06.90 Bulletin 90/25

(84) Designated Contracting States:
AT BE CH DE ES FR GB GR IT LI NL SE

(71) Applicant: UNILEVER PLC
Unilever House Blackfriars P.O. Box 68
London EC4P 4BQ(GB)

(84) GB

Applicant: UNILEVER NV
Burgemeester s'Jacobplein 1 P.O. Box 760
NL-3000 DK Rotterdam(NL)

(84) BE CH DE ES FR GR IT LI NL SE AT

(72) Inventor: Allen, Keith Charles
33 Hurst Avenue
Horsham West Sussex RH12 2 EL(GB)
Inventor: Lothian, Barry Rowland
9 Browings Marlpit Hill
Edenbridge Kent, L62 8ER(GB)

(74) Representative: Roscoe, Brian Corrie et al
UNILEVER PLC Patents Division P.O. Box 68
Unilever House
London EC4P 4BQ(GB)

(54) Emulsion polymers.

(57) The scrub and water resistance of paints and plasters are improved by incorporating a pressure emulsion polymer. This emulsion is formed in the absence of monomers containing acidic groups but in the presence of a stabilising surfactant including a C14 to C20 alkylene moiety.

EP 0 373 866 A2

## EMULSION POLYMERS

FIELD OF THE INVENTION:

The invention relates to copolymer emulsions usable in paint and plaster formulations to give improved scrub and water resistance. Paints and plasters are usable on interior or exterior surfaces.

BACKGROUND OF THE INVENTION:

The use of paint formulations to protect surfaces from damage whether by physical or chemical means is well known. Such surface coatings, whether used internally or externally will be expected to provide a decorative surface.

Whether used in an industrial or domestic environment paints are expected to provide a resistance to cleaning so as to give an effective surface, judged by its protective or decorative properties, over a period of time. The resistance of a paint surface to repeated cleaning, usually scrubbing is therefore an important characteristic.

GENERAL DESCRIPTION OF THE INVENTION:

The invention provides a copolymer emulsion post reacted with an epoxy silane, which post reacted emulsion imparts improved wet scrub resistance to a paint composition. The term 'post reacted' means a copolymer emulsion is first formed using pressure polymerisation technology, i.e. above about 20 bar, preferably from about 40 bar, to about 100 bar, in the absence of monomers containing acid groups but in the presence of a stabilising surfactant containing a C14 to C20 alkylene moiety and then reacted with an effective amount of an epoxy silane, preferably at a level of from about 0.1% to about 3% by weight on total weight of emulsion. The post reaction step will usually be performed in the range 20°C to 60°C. Usually the copolymer emulsion will be based on terpolymers having vinyl acetate, vinyl chloride and ethylene as the predominant monomers. Preferably the terpolymers have the composition ratios:

| | |
|---|---|
| vinyl acetate : vinyl chloride | 4.0 to 0.54:1 |
| vinyl acetate : ethylene | 13.3 to 1.5:1 |
| vinyl chloride: ethylene | 1.0 to 11.5:1 |

Usually the emulsions of the invention will have a solids content from about 20% to about 70% by weight.

More preferably the weight percentages of the monomers are

| | |
|---|---|
| vinyl acetate (vinyl ester of C2 to C18 alkanoic acid) | 30% to 70% |
| vinyl chloride | 15% to 60% |
| ethylene (C2 to C4 alkylene) | 5% to 20% |
| additional monomers | 0.1% to 10% |

Vinyl acetate and vinyl propionate examples of a vinyl ester of a C2 to C18 alkanoic acid to which the invention is generally directed. Other examples of the alkylene component are propylene and butylene.

The epoxy silane preferably has the formula X-Si(OR)$_3$ where X is an alkyl group containing a reactive epoxy moiety and the three R radicals, which may be the same or different, are each hydrogen, C1 to C4 alkyl radicals with not more than two of the R radicals being hydrogen. The epoxy silane is preferably a gamma glycidoxysilane and examples are gamma glycidoxy propyl trimethoxy silane and gamma glycidoxy propyl methoxy diethoxysilane.

Usually the stabilising surfactant is present at a level of 1% to 10%, preferably 2% to 8%, by weight of copolymerisable monomers.

The post reacted emulsions of the invention are usable in paints and plasters intended for surface coatings. These compositions will usually comprise

(i) 3% to 35% dry wt copolymer solids

(ii) 5% to 35% by wt aqueous phase including water present in the emulsion

(iii) 5% to 55% by wt of filler, and

(iv) 5% to 30% by wt of pigment.

The fillers will include quartz powder, kaolin, silica and milled minerals; the pigments include titanium dioxide, zinc oxide and zinc sulphide.

The post reacted emulsions of the invention are of particular value with paints having PVC of at least 75%.

TEST METHODS:

The methods of testing referred to subsequently used the following procedures.

| i) Scrub resistance: A test formulation containing by weight (g): | |
|---|---|
| Titanium dioxide | 52 |
| Calcium carbonate extender | 420 |
| Dispersants | 35 |
| Thickener | 191 |
| Coalescent | 7.5 |
| Bactericide | 0.4 |
| Water | 210 |
| Emulsion | 84 |

The paint formulation was adjusted to a pH of 8.5 to 9.0 and had a pvc of 82%. The paint was drawn down on a plastics/foil substrate to give a 5 micron film and allowed to dry for 7 days. PVC is pigment volume concentration and is the volume of pigment in a dried paint film.

The paint surface was then scrubbed using a Sheen apparatus obtainable from Sheen Instruments Ltd of Waldgrave Rd, Teddington, England using water as the medium. The resistance can be measured as the wear obtained for a known number of scrub strokes or the number of strokes to give equivalent wear.

SPECIFIC DESCRIPTION OF THE INVENTION:

One example of the preparation of a copolymer emulsion according to the invention and its use in a paint composition will now be given.

Distilled water (3200g) was charged to to a stirred reaction vessel (12 litres) with

| formic acid | 10 mls |
|---|---|
| ferric chloride (1% aq) | 4.2 mls |
| Lankropol OPA (50% aq)* | 360 mls |

* Potassium salt of sulphonation product of oleic acid obtainable from Lankro Chemicals of Manchester England.

The solution was heated to 40°C and purged with nitrogen (twice) and then ethylene (720g) was added. 900g of a monomer feedstock comprising

3

| vinyl acetate | 4020 g |
|---|---|
| vinyl chloride | 1200 g |

was then pumped in and the reaction mass stirred for 10 minutes.

Two initiator solutions having the compositions

| A. | |
|---|---|
| sodium persulphate | 24 g |
| sodium bicarbonate | 20 g |
| distilled water | 400 g |

| B. | |
|---|---|
| sodium formaldehyde sulphoxylate | 9 g |
| sodium vinyl sulphonate (25% aq) | 240 g |
| distilled water | 180 g |

had been preivously prepared.

The monomer feedstock was then continuously added over 4 hours with the temperature being raised to 50°C during the first 30 minutes of addition. Initiator solutions A and B were continuously added with monomers over a period of 6 hours with the first 15 minutes and final 45 minutes being at twice the rate of the middle period.

When these additions were complete the reaction mass was held at 50°C for 30 mins. Initiator solutions

| C. | |
|---|---|
| t-butyl hydroperoxide | 18 g |
| distilled | 150 g |

| D. | |
|---|---|
| sodium metabisulphite | 10.2 g |
| distilled water | 150 g |

were added over 30 mins while the reaction mass was allowed to cool to ambient. This reaction procedure provided the basic copolymer emulsion which had a solids content of 55% by weight, after adjustment with further addition of water (ca 180g).

The product emulsion was then tested in parallel with a sample which had been post reacted with gamma-glycidoxy propyl trimethoxysilane (1% level), after adjusting pH to 8.5 to 9.0, and allowed to stand for 24 hrs. When subjected to the scrub test (2500 strokes) the base product emulsion gave moderate wear and the post reacted product negligible wear.

Another stabilising surfactant having an alkylene moiety and usable in the invention is oleyl propanol amide sulphosuccinate obtainable from Witco of USA under the trade name Emcol 8300.

**Claims**

4

1. A process of preparing a copolymer emulsion wherein

i) The momoner components are reacted under pressure emulsion polymerisation conditions in the absence of monomers containing acid groups but in the presence of an effective amount of a stabilising surfactant including a C14 to C20 alkylene moiety and

ii) the emulsion is reacted chemically with an effective amount, preferably from about 0.1% to about 3% by weight, of an epoxy silane material.

2. A process according to claim 1 wherein the pressure emulsion polymerisation is performed at a pressure in the range from about 20 bar to about 100 bar.

3. A process according to claim 1 or 2 wherein the emulsion is reacted with the epoxy silane at a temperature in the range 20° C to 60° C.

4. A process according to any preceding claim wherein the weight percentages of the monomers are :

| Vinyl ester of C2 to C18 alkanoic acid | 30% to 70% |
| vinyl chloride | 15% ti 60% |
| C2 to C4 alkylene | 5% to 20% |

5. A process according to any preceding claim wherein the epoxy silane has the formula $X\text{-}Si(OR)_3$ where X is an alkyl group containing a reactive epoxy moiety and the R radicals, which may be the same or different, are each hydrogen, C1 to C4 alkyl radicals with not more than two of the radicals being hydrogen.

6. A process according to any preceding claim wherein the stabilising surfactant is present in an amount of 1% to 10% by weight of copolymerisable monomers, preferably 2% to 8%

7. A paint or plaster composition containing from about 3% to about 35% by weight (dry) of the emulsion prepared by the process of any preceding claim.